# EUROPEAN PATENT SPECIFICATION

(11) **EP 0 671 300 B1**
(45) Date of publication and mention of the grant of the patent: **15.07.1998**
(21) Application number: 95301412.3
(22) Date of filing: 03.03.1995
(51) Int. Cl.: B60R 22/20, B60N 2/36

(54) **Multiposition vehicle rear seat arrangement**
Anordnung eines Fahrzeugsrücksitzes mit mehreren Stellungen
Agencement de siège arrière de véhicule à plusieurs positions

(30) Priority: 03.03.1994 GB 9404120
(43) Date of publication of application: 13.09.1995
(73) Proprietor: ALLIEDSIGNAL LIMITED, Kingswood, Bristol BS15 2NL (GB)
(72) Inventor: Burke, David, Stanwix Carlisle (GB); Downie, Andrew, Carlisle CA2 6TS (GB)
(74) Representative: Freeman, Jacqueline Carol

(56) References cited:
- EP-A- 0 543 706
- DE-A- 3 011 165
- FR-A- 2 662 655

## Description

This invention relates to a multiposition rear seat arrangement, especially to such an arrangement including a seat belt buckle mounting (see, for example, FR-A-2 662 655, corresponding to the preamble of claim 1.)

In motor vehicles it is usual for front seats to be adjustable to accommodate occupants having different lengths of leg and it is known to provide seat belt buckle mounting which adapt to such adjustment. However, rear seats are usually fixed in position and the respective buckle anchorages are designed to permit the safety restraint buckles to project through an aperture or often to simply pass through a separation of the seat and seat back squabs. In the case of hitherto unusually small vehicles designed to accommodate four adult passengers it may be desirable to provide for some forward movement of the rear seat, possibly when not occupied, to enhance the available storage space for luggage behind the rear seat. Such movement of the rear seat might readily be provided by the use of a slide similar to a conventional front seat slide but this may result in the seat belt buckle anchorages needing to be unacceptably long if the buckles are not to be retracted through the seat during the forward adjustment.

The object of the invention is to provide a multiposition rear seat arrangement which overcomes the above shortcoming.

According to the present invention an adjustable vehicle rear seat arrangement is provided which comprises a movable seat having a component which is movable fore and aft in a longitudinal direction of the vehicle body between predetermined fore and aft positions and further comprising means for securing the seat by means of said component in a selected position, and seat belt anchorage means connected to said component via attachment means such that the position of the anchorage is adjustable with the seat, characterised in that said seat further comprises pivot link mountings the effective lengths of which are half the distance between the fore and aft positions.

Preferably the arrangement includes means for locking the component at the aft position.

Preferably said arrangement is carried in slots provided in a U-shaped bracket.

In order that the invention may be more clearly understood and readily carried into effect the same will be further described by way of example with reference to the accompanying drawings of which:-
Fig. 1 illustrates in schematic manner a preferred rear seat mounting arrangement;
Fig. 2 illustrates on a larger scale a centre two position rear adjustment bracket employed in the arrangement of Fig. 1;
Fig. 3 illustrates one of two position toggle assemblies employed in the arrangement of Fig. 1; and
Fig. 4 illustrates a modification to incorporate a latching mechanism.

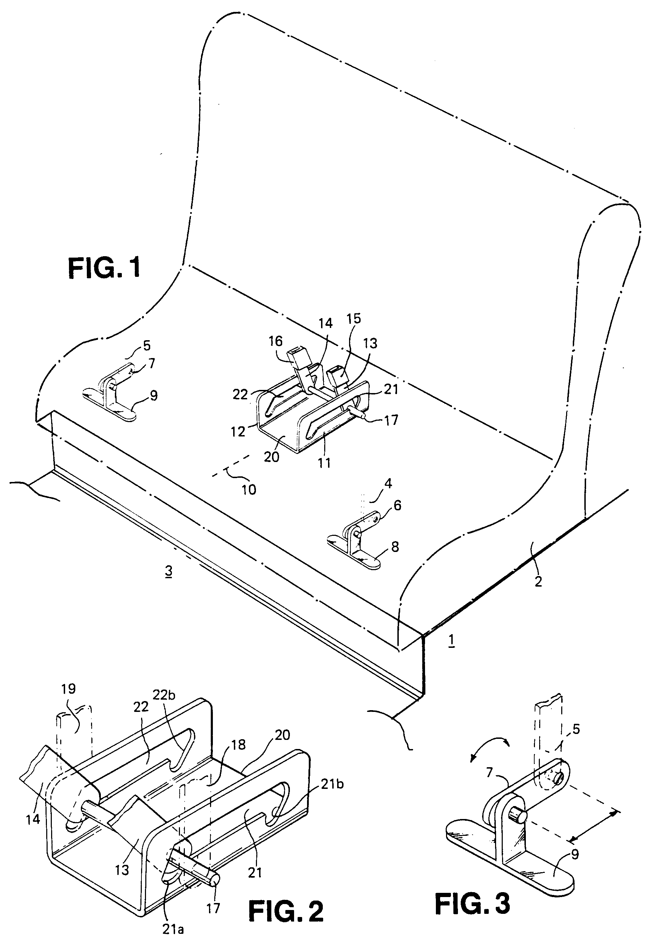

Referring to the drawing, a seat platform part of the body of a relatively small motor car is shown at 1 is to support a rear bench seat 2 is shown. The body is raised in the vicinity of the vehicle rear axle and affords a passenger foot well at 3. The rear bench seat shown by broken outline is designed to adopt one of two positions. In the illustration, the seat is in the rear-most of the two positions. In order to achieve these two positions the framework of the rear seat squab is located at left and right forward points downward extending brackets shown in pecked outlines at 4 and 5 respectively these brackets being respectively connected via toggle links 6 and 7 to body-mounted brackets 8 and 9. The toggle link 7 and its mounting bracket 9 are shown on a larger scale in Fig. 2.

On either side of the centre line 10 the seat squab 2 is provided with through-slots 11 and 12 via which steel seat belt mounting straps 13 and 14 extend and carry buckles 15 and 16 for use by the occupants of the two rear seat positions. As shown in Fig. 2, these two mounting straps are carried on a transverse bar 17 which extends between two further downward projecting brackets 18 and 19 (shown in broken outlines) of the frame of the seat. The transverse bar 17 is supported on the body part by passing through longitudinally extending slots 21 and 22 in the upward extending side portions of the U-shaped section adjustment bracket 20. These slots have end lobes 21a, 22a: 21b, 22b respectively. These slots permit movement of the bar 17 between the respective forward and rearward seat positions, the longitudinal distance between these positions equating to twice the distance between the pivot axes of the toggle links such as shown in Fig. 3. In Fig. 2, the bar 17 is shown in the position it takes up when the seat is moved to its forward position and it will be appreciated that the buckle mounting straps 13 and 14 maintain the same accessible position relative to the seat 2 at either location of the seat.

Preferably, the seat squab 2 is retained against forward longitudinal or tilting movement, particularly in its rear most location, by means of spring-loaded latches one of which latches conveniently retains the bar 17 in the lowermost lobes 21a and 22a or 21b and 22b of the slots 21 and 22 as shown in Fig. 2 and the second of which latches retains the front of the seat squab against upward movement.

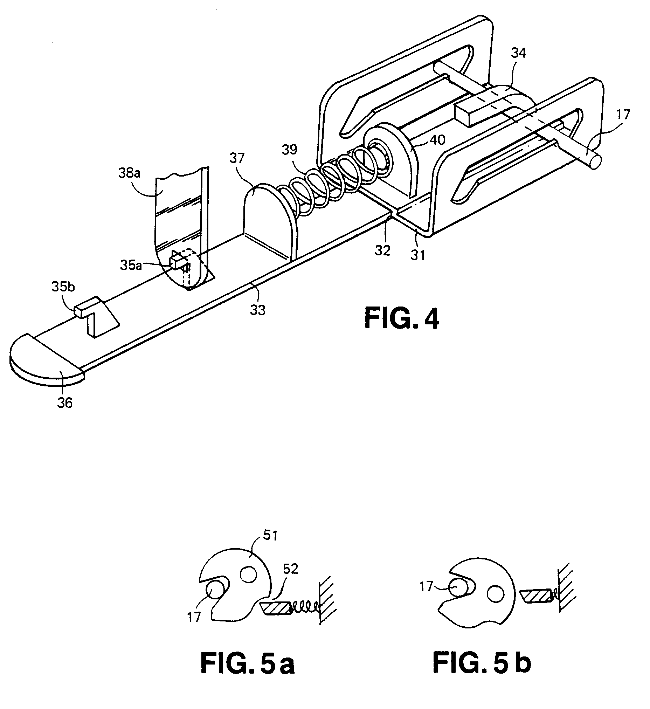

One example of such a latching means is illustrated in Fig. 4 wherein the base 31 of the U section adjustment bracket is formed to provide an inverted U-shaped guide channel 32 for a latch bar 33 which is assembled therewith to the vehicle body during attachment of the bracket 31. The bar 33 is a freely rearwardly slideable in the channel 32 of base 31 against the action of a compression spring and is provided at the rearward end with an upward extending latch portion 34 which is longitudinally forwardly movable with the bar to rest above the transverse bar 17 as shown. The forward end of the bar is provided with a rounded moulded plastics release knob 36 which projects slightly forward of the body 1 beneath the front edge of the seat squab. Bar 33 also comes with two further second latch portions 35a and 35b engageable with an eye of a downward projecting bracket 38 of the seat squab. The bar 33 is normally forwardly urged by a captive compression spring 39 which is located to act between flanges 37 and 40 of the bar 33 and the latch bracket respectively.

In operation the projecting release knob 36 is pressed rearward and the seat is manually raised and forwardly moved to the forward location at which it is then re-latched by engagement beneath portion 35b upon release of the bar 33 to move under the action of the spring 39.

Alternative forms of latch may be employed such as are used on car door mechanisms to lock the bar 17 in its desired location. Such a mechanism is illustrated in Fig. 5a and Fig. 5b, the latter showing the released condition of the jaw 51. The spring loaded catch 52 may conveniently be releasable by a control knob via a Bowden cable (not shown).

## Claims

1. An adjustable rear seat arrangement for a vehicle comprising a movable seat (2) having a component (17) which is movable fore and aft in the longitudinal direction of the vehicle body between predetermined fore and aft positions, and further comprising means for securing the seat by means of said component (17) in a selected position, and seat belt anchorage means (15, 16) connected to said component (17) via attachment means (13, 14) such that the position of the anchorage is adjustable with the seat (2), characterised in that said seat (2) further comprises pivot link mountings (6, 7), the effective lengths of which are half the distance between the fore and aft positions.

2. An arrangement according to claim 1 comprising means for locking (21b, 22b) the component at the aft position.

3. An arrangement according to claim 1 to claim 2 comprising means for guiding (21, 22) said component between the fore and aft positions.

4. An arrangement according claim 3, wherein said component guiding means comprises slots (21, 22) provided in a U-shaped bracket (20).

5. An arrangement according to any one of the preceding claims comprising means (21b, 22b, 34) for retaining the rear seat component in at least the aft position and wherein means (33) are provided for releasing the retaining means.

6. An arrangement according to any one of the preceding claims comprising means for retaining the component against upward movement and means (33) for releasing the upward movement retaining means.

7. An arrangement according to any one of claims 5 and 6, wherein the or each retaining means (34) comprises resilient biasing means (39).

## Patentansprüche

1. Einstellbare Rücksitzanordnung für ein Fahrzeug, die einen verschiebbaren Sitz (2) aufweist, der eine Komponente (17) hat, die in der Längsrichtung des Fahrzeugchassis zwischen einer vorgegebenen vorderen und einer vorgegebenen hinteren Position vor und zurück verschiebbar ist, und die weiterhin Mittel aufweist, um den Sitz mittels der Komponente (17) in einer ausgewählten Position zu sichern, und Sitzgurtverankerungsmittel (15, 16) aufweist, die über Befestigungsmittel (13, 14) mit der Komponente (17) so verbunden sind, daß die Position der Verankerung bei dem Sitz (2) einstellbar ist, dadurch gekennzeichnet, daß der Sitz (2) weiterhin Drehzapfenverbindungsbefestigungen (6, 7) aufweist, deren wirksame Länge gleich dem halben Abstand zwischen der vorderen und der hinteren Position ist.

2. Anordnung gemäß Anspruch 1, die Mittel (21b, 22b) aufweist, um die Komponente in der hinteren Position festzustellen.

3. Anordnung gemäß Anspruch 1 und Anspruch 2, die Mittel (21, 22) aufweist, um die Komponente zwischen der vorderen und der hinteren Position zu führen.

4. Anordnung gemäß Anspruch 3, wobei die Komponenten-Führungsmittel Schlitze (21, 22) aufweisen, die in einem U-förmigen Bügel (20) vorgesehen sind.

5. Anordnung gemäß irgendeinem der vorhergehenden Ansprüche, die Mittel (21b, 22b, 34) aufweist, um die Rücksitzkomponente in mindestens der hinteren Position festzuhalten, und wobei Mittel (33) vorgesehen sind, um die Festhaltemittel freizugeben.

6. Anordnung gemäß irgendeinem der vorhergehenden Ansprüche, die Mittel aufweist, um die Komponente gegenüber einer Aufwärtsbewegung festzuhalten, und Mittel (33) aufweist, um die Aufwärtsbewegungs-Festhaltemittel freizugeben.

7. Anordnung gemäß irgendeinem der Ansprüche 5 und 6, wobei die oder jedes Festhaltemittel (34) elastische Vorbelastungsmittel (39) aufweisen.

## Revendications

1. Agencement de siège arrière réglable pour un véhicule, comprenant un siège mobile (2) comportant un composant (17) pouvant être déplacé vers l'avant et vers l'arrière dans la direction longitudinale de la carrosserie du véhicule, entre des positions avant et arrière prédéterminées, et comprenant en outre un moyen pour fixer le siège par l'intermédiaire dudit composant (17) dans une position sélectionnée, et un moyen d'ancrage de la ceinture de sécurité (15, 16), connecté audit composant (17) par l'intermédiaire d'un moyen de fixation (13, 14), de sorte que la position de l'ancrage peut être réglée avec le siège (2), caractérisé en ce que ledit siège (2) comprend en outre des montages de liaison à pivot (6, 7), dont les longueurs effectives correspondent à la moitié de la distance entre les positions avant et arrière.

2. Agencement selon la revendication 1, comprenant un moyen pour verrouiller (21b, 22b) le composant au niveau de la position arrière.

3. Agencement selon les revendications 1 et 2, comprenant un moyen pour guider (21, 22) ledit composant entre les positions avant et arrière.

4. Agencement selon la revendication 3, dans lequel ledit moyen de guidage du composant comprend des fentes (21, 22), agencées dans une console en U (20).

5. Agencement selon l'une quelconque des revendications précédentes, comprenant un moyen (21b, 22b, 34) pour retenir le composant de siège arrière dans au moins la position arrière, et comportant des moyens (33) pour débloquer le moyen de retenue.

6. Agencement selon l'une quelconque des revendications précédentes, comprenant un moyen pour retenir le composant contre un déplacement vers le haut et un moyen (33) pour débloquer le moyen de retenue contre un déplacement vers le haut.

7. Agencement selon l'une quelconque des revendications 5 et 6, dans lequel le ou chaque moyen de retenue (34) comprend un moyen poussoir élastique (39).
